# EUROPEAN PATENT APPLICATION

(11) **EP 2 921 957 A1**
(43) Date of publication of application: **23.09.2015**
(21) Application number: 14756339.9
(22) Date of filing: 03.01.2014
(51) Int. Cl.: G06F 9/50

(54) **METHOD AND APPARATUS FOR ALLOCATING CORE RESOURCE, AND MANY-CORE SYSTEM**

(30) Priority: 26.02.2013 CN 201310059705
(71) Applicant: Huawei Technologies Co., Ltd., Longgang District Shenzhen, Guangdong 518129 (CN)
(72) Inventor: WU, Xiaoke, Shenzhen Guangdong 518129 (CN); WANG, Wei, Shenzhen Guangdong 518129 (CN)
(74) Representative: Lord, Michael
(86) International application number: PCT/CN2014/070061
(87) International publication number: WO 2014/131317

(57) **Abstract**

The present invention provides a core resource allocation method and apparatus, and a many-core system, which are used to allocate core resources on a many-core platform. The method includes: acquiring a quantity of idle cores needed for a user process; determining at least two scattered core partitions meeting the quantity, where each core partition is a set of one or multiple cores, and all cores in each core partition are idle cores; combining the at least two scattered core partitions to form one continuous core partition; and allocating the formed continuous core partition to the user process. In this way, process interaction can be directly performed between different cores in a continuous core partition allocated to a user process, thereby improving efficiency of communication between processes; meanwhile, a waste of core resources can be effectively avoided, thereby improving an overall utilization rate and a parallel processing capability of a processor.

## Description

This application claims priority to Chinese Patent Application No. 201310059705.6, filed on February 26, 2013 and entitled "CORE RESOURCE ALLOCATION METHOD AND APPARATUS, AND MANY-CORE SYSTEM", which is incorporated herein by reference in its entirety.

### TECHNICAL FIELD

The present invention relates to the field of communications technologies, and in particular, to a core resource allocation method and apparatus, and a many-core system.

### BACKGROUND

With the ongoing development of computer technologies, processors have entered the multi-core/many-core era. A quantity of schedulable cores in a computer system is increased, and multiple threads in a same process are allocated to different cores to run, so that multiple cores cooperate in parallel to accomplish a specific task. To enhance use efficiency of a multi-core/many-core processor and reduce contention of applications for core resources, physical partitioning can be performed on cores to form multiple domains (representing core partitions). Each domain may include multiple cores that are in continuous or scattered positions, and core resource sets of different domains may be provided for different applications to mitigate resource contention.

Generally, after core partitioning is performed, management and allocation of the cores further need to be implemented by using a load balancing mechanism, so as to enhance an overall utilization rate of the multi-core/many-core processor and make full use of a parallel processing capability of the processor. A current balancing manner may be described as follows:
first, determining one current core core from a current domain, and performing traversal from the current core to detect a load condition of each core in the current domain, so as to determine the busiest core;
next, determining whether the busiest core is the current core; and if yes, terminating the operation; otherwise, performing traversal to detect a load condition of each running queue in the busiest core, so as to determine the busiest running queue in the busiest core;
subsequently, determining a quantity of movable processes in combination with the load condition of the current core, and moving the determined quantity of processes from the busiest running queue to a running queue in the current core, so as to implement load balancing of the current domain; and
finally, using the current domain as a child node, switching to a parent node to which the child node belongs, and performing load balancing on the parent node by using the foregoing method.

Such a load balancing method has the following disadvantages:

After scheduling of core resources, different threads in a same process may be allocated to scattered cores at long distances to run. When information interaction needs to be performed between threads, information may need to pass through multiple cores running other tasks, resulting in the occurrence of a conflict in communication between the threads in the process, and significantly reducing communication efficiency. In addition, communication between threads can be performed only after cores running other tasks become idle, which also results in low communication efficiency.

Besides, such a manner lacks global and centralized management of cores, and a large number of scattered cores may appear. As a result, a core resource partition that includes a few core resources cannot be allocated, and it is impossible to use every core to respond to applications, leading to a waste of core resources and affecting a parallel processing capability of a multi-core/many-core processor.

### SUMMARY

A core resource allocation method and apparatus, and a many-core system in embodiments of the present invention are used to improve efficiency of communication between processes and a parallel processing capability of a processor.

Accordingly, the embodiments of the present invention provide the following technical solutions:

According to a first aspect, an embodiment of the present invention provides a core resource allocation method used for allocation of core resources on a many-core platform, where the method includes:
acquiring a quantity of idle cores needed for a user process;
determining at least two scattered core partitions meeting the quantity, where each core partition is a set of one or multiple cores and all cores in each core partition are idle cores;
combining the at least two scattered core partitions to form one continuous core partition; and
allocating the formed continuous core partition to the user process.

In a first possible implementation manner of the first aspect, the acquiring a quantity of idle cores needed for a user process includes:
Receiving a request sent by the user process, and parsing the request to obtain the quantity of idle cores needed for the user process; or,
searching an idle core quantity configuration database to obtain the quantity of idle cores needed for the user process, where the database stores a correspondence between the user process and the quantity of idle cores.

With reference to the first aspect and the first possible implementation manner of the first aspect, in a second possible implementation manner, the combining the at least two scattered core partitions to form one continuous core partition includes:
selecting one reference core partition from the at least two scattered core partitions; and
migrating remaining another core partition to combine the reference core partition and the another core partition to form the continuous core partition.

With reference to the second possible implementation manner of the first aspect, in a third possible implementation manner, the migrating remaining another core partition includes:
storing a task being run in an allocated core partition adjacent to the reference core partition, where a quantity of cores in the allocated core partition is the same as a quantity of cores in the another core partition; and
allocating the task to the another core partition to run.

With reference to the first aspect and the first possible implementation manner of the first aspect, in a fourth possible implementation manner, the combining the at least two scattered core partitions to form one continuous core partition includes:
selecting one reference core partition and one secondary core partition from the at least two scattered core partitions according to a core partition migration cost, so as to minimize a total core partition migration cost, where the total core partition migration cost is a sum of migration costs of the scattered core partitions;
migrating the secondary core partition to combine the secondary core partition and the reference core partition; and
if there still is remaining another core partition, further determining one reference core partition and one secondary core partition from the combined core partition and the remaining another core partition, and perform core partition migration until the at least two scattered core partitions are combined to form one continuous core partition.

With reference to the fourth possible implementation manner of the first aspect, in a fifth possible implementation manner, the migration cost is determined according to the length of a migration path and/or the quantity of cores to be migrated, where when the migration path is long, the migration cost is high, and when the quantity of cores to be migrated is large, the migration cost is high.

With reference to the fourth possible implementation manner of the first aspect, in a sixth possible implementation manner, the migrating the secondary core partition includes:
storing a task being run in an allocated core partition adjacent to the reference core partition, where a quantity of cores in the allocated core partition is the same as a quantity of cores in the secondary core partition;
allocating the task to the secondary core partition to run.

With reference to the fourth possible implementation manner of the first aspect, in a seventh possible implementation manner, the allocating the task to the secondary core partition to run includes:
determining a shortest migration path between the secondary core partition and the reference core partition; and
forwarding, according to the shortest migration path, the task to the secondary core partition to run.

With reference to the seventh possible implementation manner of the first aspect, in an eighth possible implementation manner, if there are at least two shortest migration paths, weighting processing is performed on the shortest migration paths according to a quantity of cores included in core partitions through which the shortest migration paths pass, the shortest migration path with a minimum weight value is determined to be an optimal path, and the task is forwarded according to the optimal path.

With reference to the eighth possible implementation manner of the first aspect, in a ninth possible implementation manner, a manner of the weighting processing is:
adding weight values of the core partitions through which the shortest migration path passes to obtain a weight value of the shortest migration path, where the weight value of the core partition is the quantity of cores included in the core partition, or the weight value of the core partition is a weight determined according to the quantity of cores included in the core partition.

With reference to the eighth possible implementation manner of the first aspect, in a tenth possible implementation manner, if there are at least two optimal paths, core distribution densities of at least two core partitions in the continuous core partitions formed through migration according to the optimal paths are calculated, and the secondary core partition is migrated, so as to maximize a core distribution density of the continuous core partition.

With reference to the tenth possible implementation manner of the first aspect, in an eleventh possible implementation manner, a manner of calculating the core distribution density is:
calculating a sum of distances between every two cores in the continuous core partition; or,
calculating a sum of squares of distances between every two cores in the continuous core partition.

With reference to the first aspect and any one of the first to eleventh possible implementation manners of the first aspect, in a twelfth possible implementation manner, the at least two scattered core partitions meeting the quantity are used as one combination; if there are at least two combinations meeting the quantity, a core partition distribution density of each combination is calculated, a combination having a highest core partition density is determined to be an optimal combination, and at least two scattered core partitions forming the optimal combination are then combined to form the continuous core partition.

With reference to the twelfth possible implementation manner of the first aspect, in a thirteenth possible implementation manner, a manner of calculating the core partition distribution density is:
calculating a sum of distances between every two core partitions in the combination; or,
calculating a sum of squares of distances between every two core partitions in the combination.

With reference to the first aspect and any one of the first to eleventh possible implementation manners of the first aspect, in a fourteenth possible implementation manner, before the determining at least two scattered core partitions meeting the quantity, the method further includes:
determining whether there is a continuous core partition meeting the quantity on the many-core platform; and if yes, allocating the continuous core partition to the user process; if not, executing again the step of determining at least two scattered core partitions meeting the quantity.

According to a second aspect, an embodiment of the present invention provides a core resource allocation apparatus used for allocation of core resources on a many-core platform, where the apparatus includes:
an acquiring unit, configured to acquire a quantity of idle cores needed for a user process;
a searching unit, configured to determine at least two scattered core partitions meeting the quantity, where each core partition is a set of one or multiple cores and all cores in each core partition are idle cores;
a combining unit, configured to combine the at least two scattered core partitions to form one continuous core partition; and
an allocating unit, configured to allocate the continuous core partition combined by the combining unit to the user process.

In a first possible implementation manner of the second aspect, the acquiring unit is specifically configured to receive a request sent by the user process, and parse the request to obtain the quantity of idle cores needed for the user process; or, the acquiring unit is specifically configured to search an idle core quantity configuration database to obtain the quantity of idle cores needed for the user process, where the database stores a correspondence between the user process and the quantity of idle cores.

With reference to the second aspect and the first possible implementation manner of the second aspect, in a second possible implementation manner, the combining unit includes:
a first selecting unit, configured to select one reference core partition from the at least two scattered core partitions; and
a first migrating unit, configured to migrate remaining another core partition to combine the reference core partition and the another core partition to form the continuous core partition.

With reference to the second possible implementation manner of the second aspect, in a third possible implementation manner, the first migrating unit includes:
a first storing unit, configured to store a task being run in an allocated core partition adjacent to the reference core partition, where a quantity of cores in the allocated core partition is the same as a quantity of cores in the another core partition; and
a first task allocating unit, configured to allocate the task to the another core partition to run.

With reference to the second aspect and the first possible implementation manner of the second aspect, in a fourth possible implementation manner, the combining unit includes:
a second selecting unit, configured to select one reference core partition and one secondary core partition from the at least two scattered core partitions according to a core partition migration cost, so as to minimize a total core partition migration cost, where the total core partition migration cost is a sum of migration costs of the scattered core partitions;
a second migrating unit, configured to migrate the secondary core partition to combine the secondary core partition and the reference core partition; and if there still is remaining another core partition, further determine one reference core partition and one secondary core partition from the combined core partition and the remaining another core partition, and perform core partition migration until the at least two scattered core partitions are combined to form one continuous core partition.

With reference to the fourth possible implementation manner of the second aspect, in a fifth possible implementation manner, the second migrating unit includes:
a second storing unit, configured to store a task being run in an allocated core partition adjacent to the reference core partition, where a quantity of cores in the allocated core partition is the same as a quantity of cores in the secondary core partition; and
a second task allocating unit, configured to allocate the task to the secondary core partition to run.

With reference to the fifth possible implementation manner of the second aspect, in a sixth possible implementation manner, the second task allocating unit includes:
a first determining unit, configured to determine a shortest migration path between the secondary core partition and the reference core partition; and
a first allocating subunit, configured to forward, according to the shortest migration path, the task to the secondary core partition to run.

With reference to the sixth possible implementation manner of the second aspect, in a seventh possible implementation manner, the second task allocating unit further includes:
a weighting processing unit, configured to: when there are at least two shortest migration paths, perform weighting processing on the shortest migration paths according to a quantity of cores included in core partitions through which the shortest migration paths pass, and determine the shortest migration path with a minimum weight value to be an optimal path, so that the first allocating subunit forwards the task according to the optimal path.

With reference to the seventh possible implementation manner of the second aspect, in an eighth possible implementation manner, the second task allocating unit further includes:
a core density calculating unit, configured to: when there are at least two optimal paths, calculate core distribution densities of at least two core partitions in the continuous core partitions formed through migration according to the optimal paths, and migrate the secondary core partition, so as to maximize a core distribution density of the continuous core partition.

With reference to the second aspect and any one of the first to eighth possible implementation manners of the second aspect, in a ninth possible implementation manner, the apparatus further includes:
a core partition density calculating unit, configured to use the at least two scattered core partitions meeting the quantity as one combination; and if there are at least two combinations meeting the quantity, calculate a core partition distribution density of each combination, and determine a combination having a highest core partition density to be an optimal combination, so that the combining unit combines the at least two scattered core partitions forming the optimal combination to form the continuous core partition.

With reference to the second aspect and any one of the first to eighth possible implementation manners of the second aspect, in a tenth possible implementation manner, the apparatus further includes:
a judging unit, configured to determine whether there is a continuous core partition meeting the quantity on the many-core platform; and if yes, allocate the continuous core partition to the user process; if not, further instruct the searching unit to determine at least two scattered core partitions meeting the quantity.

According to a third aspect, an embodiment of the present invention provides a many-core system. The system includes multiple cores. The multiple cores include one execution core. The execution core is configured to perform resource allocation on other multiple cores of the multiple cores according to the foregoing method.

In the core resource allocation method and apparatus, and the many-core system implemented in the present invention, after a quantity of idle cores needed for a user process is acquired, at least two scattered core partitions are first searched for and determined, the scattered core partitions are then further migrated to combine the scattered core partitions into one continuous core partition, and the continuous core partition is allocated to the user process to run. In this way, process interaction can be directly performed between different cores in a continuous core partition allocated to a user process, thereby improving efficiency of communication between processes; meanwhile, a waste of core resources can be effectively avoided, thereby improving an overall utilization rate and a parallel processing capability of a processor.

### BRIEF DESCRIPTION OF DRAWINGS

To describe the technical solutions in the embodiments of this application or in the prior art more clearly, the following briefly introduces the accompanying drawings needed for describing the embodiments or the prior art. Apparently, the accompanying drawings in the following description show merely some embodiments recorded in this application, and a person of ordinary skill in the art may still derive other drawings from these accompanying drawings.
FIG. 1 is a schematic diagram of task allocation of a multi-core/many-core processor;
FIG. 2 is a flowchart of Embodiment 1 of a core resource allocation method according to the present invention;
FIG. 3 is a schematic diagram of a core region linked list and a core region connection diagram in an embodiment of the present invention;
FIG. 4 is a flowchart of Embodiment 1 of a combination process of step 103 in an embodiment of the present invention;
FIG. 5 is a flowchart of Embodiment 2 of a combination process of step 103 in an embodiment of the present invention;
FIG. 6 is a schematic diagram of distribution of scattered core partition nodes in an embodiment of the present invention;
FIG. 7a is a schematic diagram of Example 1 of a continuous core partition in an embodiment of the present invention;
FIG. 7b is a schematic diagram of Example 2 of a continuous core partition in an embodiment of the present invention;
FIG. 8 is a flowchart of Embodiment 2 of a core resource allocation method according to the present invention;
FIG. 9 is a flowchart of Embodiment 3 of a core resource allocation method according to the present invention;
FIG. 10 is a schematic diagram of first distribution of a core partition before migration in an embodiment of the present invention;
FIG. 11 is a schematic diagram of first distribution of a core partition after migration in an embodiment of the present invention;
FIG. 12 is a schematic diagram of second distribution of a core partition before migration in an embodiment of the present invention;
FIG. 13 is a schematic diagram of second distribution of a core partition after migration in an embodiment of the present invention;
FIG. 14 is a schematic diagram of Embodiment 1 of a core resource allocation apparatus according to an embodiment of the present invention;
FIG. 15 is a schematic diagram of Embodiment 1 of a combining unit 603 in an embodiment of the present invention;
FIG. 16 is a schematic diagram of Embodiment 2 of a combining unit 603 in an embodiment of the present invention;
FIG. 17 is a schematic diagram of Embodiment 2 of a core resource allocation apparatus according to an embodiment of the present invention;
FIG. 18 is a schematic diagram of Embodiment 3 of a core resource allocation apparatus according to an embodiment of the present invention; and
FIG. 19 is a schematic diagram of a hardware structure of a core resource allocation apparatus according to an embodiment of the present invention.

### DESCRIPTION OF EMBODIMENTS

In order to enable a person skilled in the art to better understand the solutions in the present invention, the following describes the embodiments of the present invention in more detail with reference to accompanying drawings and implementation manners.

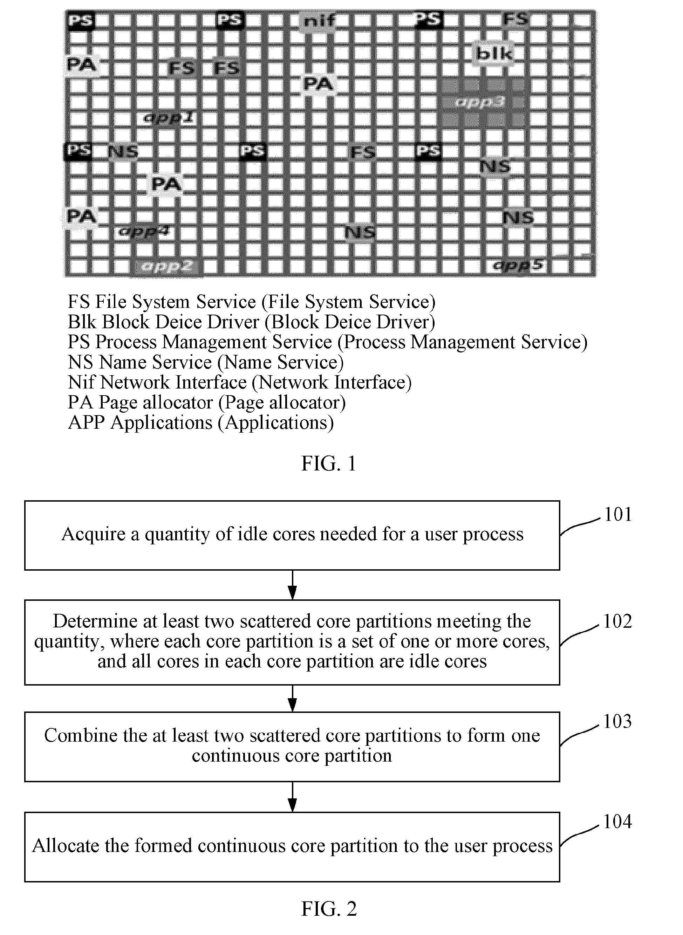

Before a core resource allocation method of the present invention is introduced, a process in which multiple cores cooperate to accomplish a task is briefly introduced first. In a same process, multiple threads may be allocated to different cores to run, and specifically, may be allocated to continuous cores to run. That is, multiple cores are located in one continuous region, and for example, reference is made to the app3 in FIG. 1. Multiple threads may also be allocated to scattered cores to run, and for example, reference may be made to the task FS in FIG. 1.

The app3 is located in a continuous core resource partition, and message interaction between cores is fast in process and high in efficiency. FSs are located in scattered cores, and to accomplish a file system service, all the FSs need to cooperate; therefore, when message interaction is implemented between the FSs by means of IPC communication, one FS needs to pass through a core where other tasks are being run to implement message communication with another FS, resulting in low communication efficiency.

In addition, after allocation of core resources is performed by using the prior art, a large number of scattered cores may be generated as shown in FIG. 1. In such a case, an overall utilization rate of a processor may further be lowered, thereby affecting a parallel processing capability of the processor. For example, a current task needs to run in parallel on 4 cores. As can be known from the foregoing analysis, to avoid low communication efficiency caused by scattered cores, continuous core resource partitions should be allocated to the current task if possible. In such a case, 2 cores between the app2 and the app4 may be not allocated because the need of the current task is not met, resulting in a waste of core resources. Alternatively, for another example, it is stipulated in advance that 6 cores are one core resource partition, and each partition is only responsible for managing cores that belong to the partition. If a current task needs to apply for 5 cores for parallel running, after the task is allocated to one core resource partition, there is one core left in the partition, also resulting in a waste of core resources.

In view of this, the present invention provides a new core resource allocation method used for allocation of core resources on a many-core platform, so as to enhance efficiency of communication between processes, avoid a waste of core resources, and enhance an overall utilization rate and a parallel processing capability of a processor.

Refer to FIG. 2, which is a flowchart of Embodiment 1 of a core resource allocation method according to the present invention. The method includes:
Step 101. Acquire a quantity of idle cores needed for a user process.

In the technical solution of the present invention, all cores in a processor are managed in a centralized way from a global view of angle. In this step, a core resource allocation apparatus is triggered by a user process to start to perform resource allocation.

A user process in the present invention may be a system service of an OS (Operating System, operating system). When a system service is started, a core needed for starting the service may be applied for from a core resource allocation apparatus, and the core resource allocation apparatus allocates a continuous core resource partition to the system service based on the solution of the present invention. In this way, a system service may be run in a core resource partition allocated to the system service, so as to provide a specific service, for example, a process service, device driving, a file service, or virtual memory.

In addition, a user process in the present invention may further be an application, and after receiving application of the application, a core resource allocation apparatus also allocates a continuous core resource partition based on the solution of the present invention for the application to run.

This step provides the following two specific implementation manners:
Manner 1: Receive a request sent by the user process, and parse the request to obtain the quantity of idle cores needed for the user process.

A user process sends a request to a core resource allocation apparatus in order to apply for a core for the user process to run, and therefore the request should include the quantity of cores needed for the user process to run. Only in this way, the core resource allocation apparatus can parse the request to learn a quantity of idle cores needed for the user process.
Manner 2: Search an idle core quantity configuration database to obtain the quantity of idle cores needed for the user process, where the database stores a correspondence between the user process and the quantity of idle cores.

In this manner, a mapping relationship between a user process and a quantity of idle cores is configured in advance. When a user process is started, a configuration database (which may be embodied as a configure file) is read to determine a quantity of idle cores needed for the current user process.

It should be noted that, an execution body of acquiring a quantity of idle cores in this step may be specifically embodied as a chips management module of an OS at the software level, and may be specifically embodied as a core for the chips management module to run at the hardware level.
Step 102. Determine at least two scattered core partitions meeting the quantity, where each core partition is a set of one or multiple cores and all cores in each core partition are idle cores.

It should be noted that, meeting the quantity refers to that a total quantity of idle cores included in the determined at least two scattered core partitions is the same as a quantity of idle cores needed for a user process. If several core partitions are called scattered core partitions, it represents that when a core in any core partition of these core partitions needs to communicate with a core in another core partition, the communication must pass through other cores that do not belong to these partitions.

As an implementation manner of the technical solution of the present invention, a core resource allocation apparatus maintains one core region linked list and one core region connection diagram, so that scattered core partitions may be searched for in a manner of searching the core region linked list.

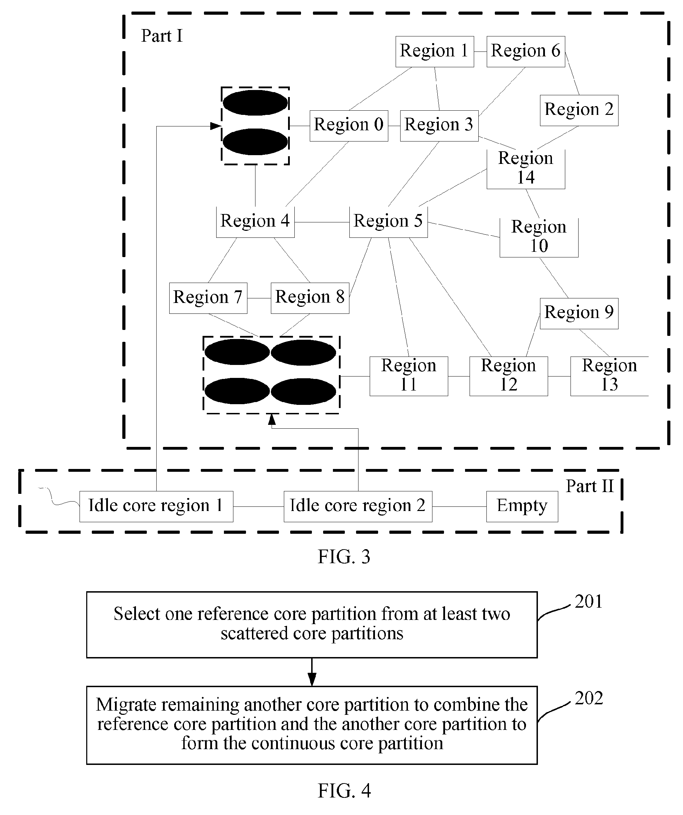

A core region connection diagram is drawn according to positions of all core partitions (including idle core partitions and allocated core partitions) included in a processor and is used for representing position relationships between different core partitions and the quantities of cores included in different core partitions, and specifically reference may be made to the part I in the schematic diagram shown in FIG. 3. Region 0 to region 14 represent 15 allocated core partitions, black nodes bounded by dashed-line boxes represent 2 idle core partitions (one includes 2 idle cores, and is defined as a first idle core partition; the other includes 4 idle cores, and is defined as a second idle core partition).

A core region linked list is used for storing a node pointing to an idle core partition in a core region connection diagram. By traversing a core region linked list, a core resource allocation apparatus can determine the scattered core partitions by means of corresponding nodes, and specifically reference may be made to the part II in the schematic diagram shown in FIG. 3. Free core region 1 is a node that can point to the first idle core partition in the connection diagram, and free core region 2 is a node that can point to the second idle core partition in the connection diagram.

A core resource allocation apparatus maintains the linked list and the connection diagram shown in FIG. 3, so that when necessary, the linked list is traversed to search for at least two scattered core partitions meeting the need of a user process.

It should be noted that, to enhance allocation efficiency of the present invention, before step 102 is executed, it may be first determined whether the total quantity of current idle cores in a processor meets the need of the user process, that is, the total quantity of current idle cores should not be less than the quantity of cores needed for the user program; and if yes, step 102 is executed; or otherwise, the request of the user process may be temporarily buffered until the processor has a capability for running the user process, and when the processor has the capability for running the user process, a continuous core partition is further allocated to the user process based on the solution of the present invention. The linked list shown in FIG. 3 is still used as an example; if a user process requests 8 core resources, it may be learned by referring to FIG. 3 that a processor currently only has 6 idle cores, and cannot meet the need of the user process; therefore, the request of applying for 8 core resources may be temporarily buffered.

Certainly, it is also feasible that the foregoing determining process is not executed before step 102, because after step 102, two results are also generated. In one result, at least two scattered core partitions meeting the quantity are determined, and resource allocation may continue to be performed based on the solution of the present invention. In the other result, at least two scattered core partitions meeting the quantity are not determined (that is, the quantity of current idle cores does not meet the need of the user process), and the request of the user process may also be buffered, and until the processor has a capability of meeting the quantity, the processing is then performed.
Step 103. Combine the at least two scattered core partitions to form one continuous core partition.

After at least two scattered core partitions are determined in step 102, the at least two scattered core partitions may be combined to form one continuous core partition in a manner of migrating core partitions, that is, positions of scattered core partitions are changed to combine different partitions that are to be allocated to the user process; in this way, during running of the user process, message interaction can be directly performed between different cores by means of IPC communication without passing through any core on which other tasks are being run, and it is also not necessary to wait for the core on which other tasks are being run to become idle to perform message interaction, so as to enhance communication efficiency of a processor and make maximum use of a parallel processing capability of the processor.
Step 104. Allocate the formed continuous core partition to the user process.

After one continuous core partition is combined in step 103, a core resource allocation apparatus may allocate the continuous core partition to a user process, so that all cores included in the continuous core partition run in parallel and cooperate to accomplish a task. A continuous core partition may be understood as that, information interaction may be performed between any two cores in the partition without passing through other cores outside the partition, that is, any core in the partition can communicate with another core in the partition without passing through a core outside the partition.

For step 103, the technical objective of the present invention may be achieved as long as at least two scattered core partitions are combined to form one continuous core partition. Preferably, a cost in the process of combining scattered core partitions into a continuous core partition may further be taken into consideration, and the cost is to be minimized, which are elaborated one by one subsequently.

It should be noted that, a cost in the present invention may be understood from the following two aspects. One aspect is the length of a migration path and the quantity of cores to be migrated, where a long path indicates a high cost and a large quantity also indicates a high cost. The other aspect is a cost in storing a task in a migration process, and specifically, the cost may be embodied as a cost in storing a context environment, for example, in storing a process control block part of processor state information, where the process control block part may include a program counter, and other register and stack information of the processor. When the process is migrated to another core resource partition to run, the process control block part of processor state information stored before needs to be loaded.

In the following, the implementation process of combining at least two scattered core partitions into one continuous core partition in step 103 is explained and described.

Refer to FIG. 4, which is a flowchart of Embodiment 1 of a combination process, which may include:
Step 201. Select one reference core partition from the at least two scattered core partitions.
Step 202. Migrate remaining another core partition to combine the reference core partition and the another core partition to form the continuous core partition.

That is, one partition is first determined to be a reference core partition, and control is then performed to migrate remaining another core partition separately to a place near the reference core partition, so as to combine and combine scattered partitions into one continuous core partition.

For a manner of selecting and determining a reference core partition, a reference core partition may be selected randomly and alternatively; or a migration cost may also be taken into consideration, and a core partition located at a central region (the central region herein is one relative central region determined according to practical distribution positions of at least two scattered core partitions) is determined to be a reference core partition, so that migration paths of remaining another core partition are as short as possible (a shorter migration path indicates a lower migration cost); or a partition that includes the largest number of cores may also be determined to be a reference core partition, so that the quantity of cores to be migrated is as small as possible (although an entire partition is migrated together in core migration, a migration cost of each partition is further affected by the quantity of cores to be migrated, and when the quantity of cores involved in migration is larger, a migration cost is higher).

It should be noted that migration in the present invention refers to that cores that are being used in allocated partitions around a reference core partition are vacated, that is, some cores, where tasks are being run, around a reference core partition are adjusted to be idle cores. Specifically, the process of allocating tasks to other core partitions in step 202 may be embodied as follows:
storing a task being run in an allocated core partition adjacent to the reference core partition, where a quantity of cores in the allocated core partition is the same as a quantity of cores in the another core partition; and allocating the task to the another core partition to run.

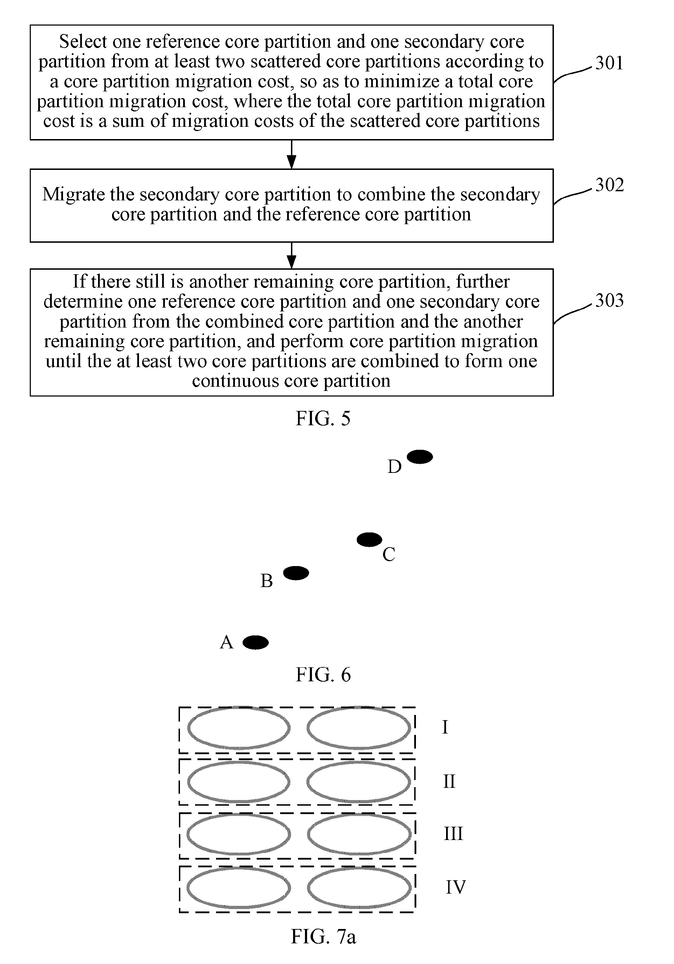

Based on the foregoing determining of a reference core partition by means of a position where a partition is located or the quantity of cores included in a partition to minimize a migration cost, to further lower the migration cost, the present invention further provides Embodiment 2 of a combination process of a continuous core partition, and for details, reference may be made to the flowchart shown in FIG. 5; the combination process includes:
Step 301. Select one reference core partition and one secondary core partition from the at least two scattered core partitions according to a core partition migration cost, so as to minimize a total core partition migration cost, where the total core partition migration cost is a sum of migration costs of the scattered core partitions.
Step 302. Migrate the secondary core partition to combine the secondary core partition and the reference core partition.
Step 303. If there still is remaining another core partition, further determine one reference core partition and one secondary core partition from the combined core partition and the remaining another core partition, and perform core partition migration until the at least two core partitions are combined to form one continuous core partition.

Different from Embodiment 1 in the foregoing, in this embodiment, after each time of migration, a reference core partition is determined again according to a practical condition. Referring to the schematic diagram shown in FIG. 6, four scattered core partitions A, B, C and D are determined. In the first migration process, C located at the central region is determined to be a reference core partition, D is determined to be a secondary core partition, and D is migrated to C to form a new partition C'. In the second migration process, if C' (that is, a position where the original C is located) is still used as a reference core partition and A and B are migrated to C' separately, a migration cost is relatively high. The reason is that in three partitions A, B and C', B is obviously located at a central region, and a cost in separately migrating A and C' to B is lower relative to that in migrating A and B to C'. Therefore, before a next time of migration process is executed, a reference core partition may be determined again according to a practical migration condition. Certainly, it is also possible that a reference core partition determined again in a current time of migration is still a reference core partition in a previous time of migration process.

In addition, it should be noted that, if two scattered core partitions meeting the quantity for the user process are determined, one continuous core partition may be formed as long as a secondary core partition is migrated once according to the method in this embodiment. However, if at least three scattered core partitions are determined, after it is determined that one secondary core partition is migrated once, a reference core partition and a secondary core partition further need to be determined again to perform a second time of or even more times of core partition migration, which is no longer described herein.

The selecting a reference core partition and a secondary core partition according to a core partition migration cost, so as to minimize a total core partition migration cost mentioned in step 301 is explained and described in the following.

First, it should be noted that a total core partition migration cost refers to a sum of costs in all migration processes in a process of combining scattered core partitions into a continuous core partition. A migration cost is mainly affected by two aspects of factors: a migration path and the quantity of cores to be migrated, that is, a migration cost is determined according to the length of a migration path and/or the quantity of cores to be migrated.

To minimize a total migration cost, a cost of each time of migration needs to be as low as possible. Generally, when there are a large number of scattered core partitions, preferably, a reference core partition and a secondary core partition are determined by using the positions of the partitions. If only two scattered core partitions are determined, or two scattered core partitions are left after many times of migration, a reference core partition and a secondary core partition may be determined by using the quantities of cores included in the core partitions; as can be known according to the foregoing introduction about the migration cost, one core partition including the larger number of cores should be used as a reference core partition, and the other core partition including the smaller number of cores is used as a secondary core partition.

The so-called minimizing a total core partition migration cost may be understood as that when a secondary core partition is determined, a partition at an edge (a partition at an edge may be understood as a partition at the largest distance from a reference core partition, that is, a partition, in a migration path, which passes through the most partition nodes. Generally, the quantities of nodes between two adjacent partitions is defined as 1; if two partitions are separated by one more partition, the quantity of nodes is correspondingly added by 1; for example, the quantity of nodes between two partitions separated by 1 partition node is 2, and the quantity of nodes between two partitions separated by 3 partition nodes is 4; a larger node quantity indicates a larger distance between two partitions) or a partition including a small number of cores should be selected as much as possible. The schematic diagram shown in FIG. 6 is still used as an example; in the first time of migration process, a partition D at the farthest edge is determined to be a secondary core partition, so that partitions (A, B and C') after the first time of migration are centralized as much as possible; then in the second time of migration, B is determined to be a reference core partition, and A and C' that have relatively high distribution densities are migrated to minimize a migration cost. In contrast, if in the first time of migration process, B is determined to be a secondary core partition and is migrated to C to form a new partition C", and A and D which are distributed in a relatively scattered manner are then migrated, the path of migrating A and D is much longer than that of migrating A and C' in the foregoing, and a corresponding cost is also much higher.

The process of migrating the secondary core partition in step 302 may be specifically embodied as follows:
storing a task being run in an allocated core partition adjacent to the reference core partition, where a quantity of cores in the allocated core partition is the same as a quantity of cores in the secondary core partition; and allocating the task to the secondary core partition to run.

The migration process in step 302 and step 303 are the same as the process of migrating remaining another core partition in step 202 in the foregoing, and in both of the processes, an allocated core partition around a reference core partition is made idle; only in this process, to lower a migration cost, attention needs to be paid to a migration order of partitions. That is, in step 202, which partition in the remaining another core partition is migrated first and which partition is migrated later are not limited, while in step 302 and step 303, a secondary core partition determined according to a migration cost is migrated, that is, there is an order requirement for migration of core partitions. In addition, one more difference that should be noted is that in step 202, there is only one unique reference core partition, while in step 302 and step 303, it is possible that one reference core partition needs to be determined again according to a practical condition after migration before a next time of migration, and a reference core partition determined again may be different from a reference core partition determine in a previous time of migration process.

The migration of a secondary core partition is used as an example in the following to briefly introduce an implementation manner of allocating a task to a secondary core partition to run.

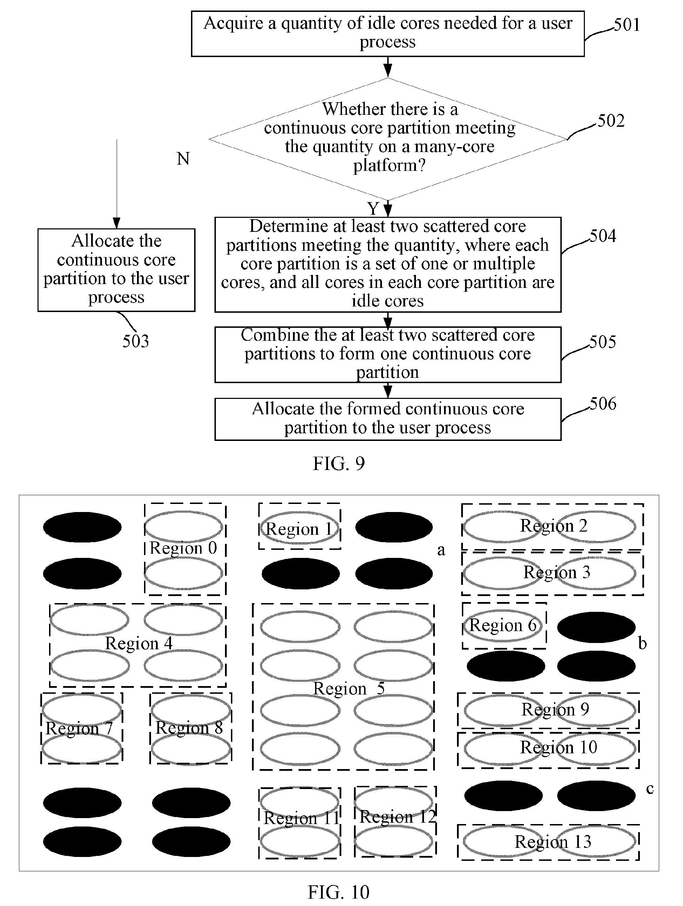

In a first case, referring to the schematic diagram shown in FIG. 10, if a core partition c needs to be migrated as a secondary core partition to a reference core partition b, it may be found by means of determining that the core partition c includes 2 idle cores and an allocated core partition region 9 also includes 2 cores; therefore, without needing to divide region 9, a task in region 9 may be directly loaded to the core partition c to run, so that region 9 becomes idle to implement migration of the core partition c.

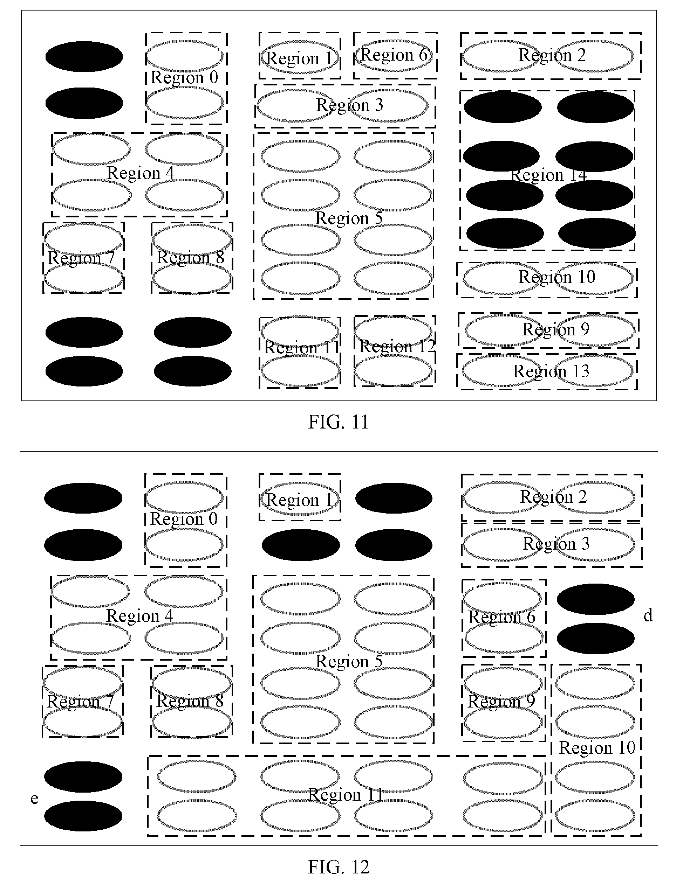

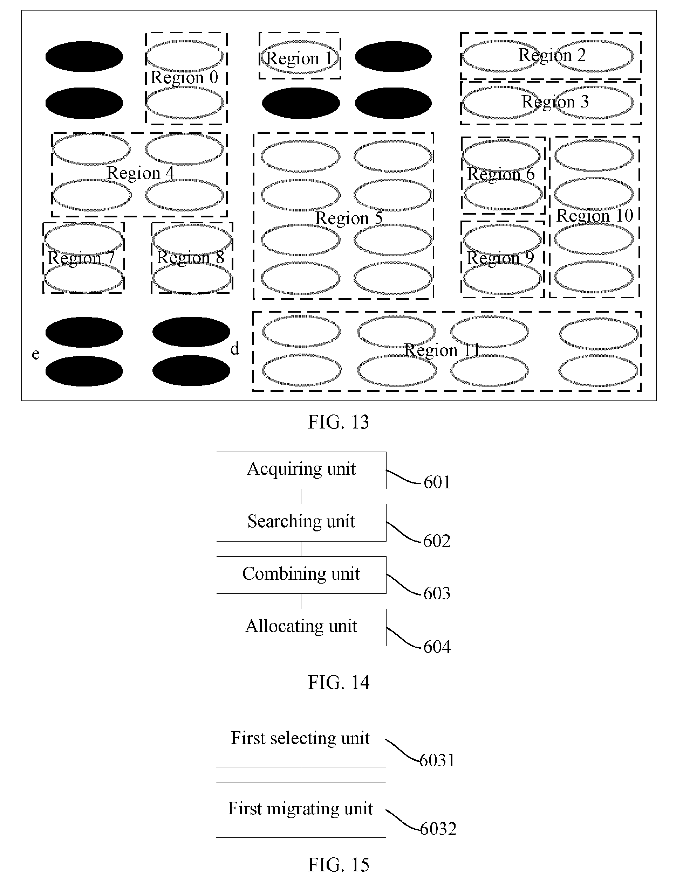

In a second case, referring to the schematic diagram shown in FIG. 12, if a core partition d is migrated as a secondary core partition to a reference core partition e, it may be found by means of determining that the core partition d includes 2 idle cores and an allocated core partition region 11 includes 8 cores; if a part of a task in region 11 is directly loaded in the foregoing manner to the core partition d to run, a case of dividing region 11 occurs, resulting in low efficiency of interaction between processes of the task being run on region 11. Therefore, in a case in which an allocated core partition needs to be divided, the present invention implements migration in a manner of forwarding a task. The specific implementation is: The core partition d is forwarded to a place around the core partition e by means of a path region 10 and region 11; that is, a part of the task in region 10 is first loaded to be run, and because d is adjacent to region 10, after such an operation, a case of dividing region 10 does not occur. The part of the task in region 11 is then further loaded to the forwarded to run to form the schematic diagram shown in FIG. 13. In this way, the objective of combining core partitions d and e is achieved without dividing any region. In this embodiment, as seen from the operation result, it is equivalent to that region 10 is moved up first and region 11 is then moved right; certainly, it is not such a simple movement of core partitions and further involves complex task allocation and migration and forward processes.

That is, during task allocation, if an allocated core partition around a reference core partition does not need to be divided, a task is directly allocated and loaded, and if an allocated core partition needs to be divided, a task is forwarded and allocated according to a certain migration path.

In the foregoing second case, after an optimal reference core partition and secondary core partition are determined according to the method of the present invention, a migration cost is also affected by a path through which a secondary core partition is forwarded and migrated to a place around a reference core partition, and accordingly, the present invention further provides the following solution to further lower a migration cost.

Solution 1: Determine a shortest migration path between the secondary core partition and the reference core partition, and forward and migrate, according to the shortest migration path, the task to the secondary core partition to run.

As discussed above, the length of a migration path directly affects a migration cost, and therefore before a secondary core partition is migrated to a reference core partition, all paths enabling the secondary core partition to be migrated to the reference core partition should be determined first, the shortest migration path, that is, a path having the lowest migration cost, is determined from all the paths, and migration of core partitions is performed according to the shortest migration path, that is, according to the shortest migration path, a stored task is allocated to the secondary core partition to run. The schematic diagram shown in FIG. 12 is still used as an example. If the core partition d is migrated as a secondary core partition to the reference core partition e, in addition to being forwarded by means of the path region 10 and region 11, the core partition d may further be forwarded by means of a path region 6, region 5, region 8, and region 7. However, it may be found by means of comparison that the two migration paths are different in length, that is, the paths pass through different numbers of core partition nodes, and therefore, in the foregoing example, a shorter path region 10 and region 11 is selected to forward and migrate a task, so as to minimize a cost of a current time of migration.

Solution 2: Determine a shortest migration path between the secondary core partition and the reference core partition; if there are at least two shortest migration paths, perform weighting processing on the shortest migration paths according to a quantity of cores included in core partitions through which the shortest migration paths pass, determine the shortest migration path with a minimum weight value to be an optimal path, and forward the task according to the optimal path.

This solution is based on Solution 1. When more than one shortest migration path is determined, one optimal path is determined from the shortest migration paths in a weighting manner, and a stored task is then forwarded and migrated to the secondary core partition according to the optimal path.

The so-called performing weighting processing according to the quantity of cores included in partitions that are passed through refers to that the quantity of cores is used as a basis for determining a weight, and one path having a minimum migration cost is determined from the at least two shortest migration paths in a weighting processing manner and used as an optimal path. That is, in a case in which migration paths are same, one more factor, that is, the quantity of cores involved in the forward of a task, affects a migration cost; if core partitions that migration paths pass through have a same node quantity, when the quantity of cores involved in the forward of a task is larger, a migration cost is higher; otherwise, a migration cost is lower.

In this solution, a specific manner of weighting processing is to add weight values of core partitions that the shortest migration path passes through to obtain a weight value of the shortest migration path. Generally, during calculation of a migration path, when two scattered core partitions are separated by several core partition nodes, these core partition nodes are regarded as "1"; herein, one optimal path is selected from paths separated by the same number of core partition nodes, one core partition node is no longer simply regarded as "1", and instead, depending on the quantity of cores included in the core partition nodes, weight values of the core partition nodes are added to eventually obtain in such a way a value representing a migration cost of the path.

For a weight value corresponding to a core partition node, the quantity of cores included in a core partition node can be directly determined to be a weight value. For example, one core partition node includes 4 cores, the weight value of the core partition node is 4, and if one core partition node includes 2 cores, the weight value is 2. Alternatively, different weight values may further be preset for partitions having different numbers of cores. For example, weight values 40% and 20% may be set for a partition including 4 cores and a partition including 2 cores, respectively. In both the foregoing manners of determining a weight value, the purpose is to distinguish core partition nodes including different numbers of cores, so as to select one optimal path having the minimum migration cost by means of the quantity of cores when migration paths pass through same numbers of nodes. The manner of determining a weight value is not limited in the present invention, as long as the foregoing objective can be achieved.

Solution 3: Determine a shortest migration path between the secondary core partition and the reference core partition; if there are at least two shortest migration paths, perform weighting processing on each shortest migration path separately, and determine the shortest migration path having the minimum weight value to be an optimal path; and if there are at least two optimal paths, calculate core distribution densities of at least two core partitions in continuous core partitions formed from migration according to the at least two optimal paths separately, and migrate the secondary core partition, so as to maximize a core distribution density of the continuous core partition.

This solution is based on Solution 2; when more than one optimal path is determined, in a manner of calculating core distribution densities in continuous core partitions formed by means of combination, one path is selected from the optimal paths to perform core partition migration.

A density in this solution is mainly used for representing position distribution conditions of multiple cores in a continuous core partition. If the cores are distributed more closely, the density is higher, and if the cores are more scattered, the density is lower. As the simplest implementation manner of representing a density, a sum of distances between every two cores is calculated. To embody fluctuations in distribution relationships between different cores more obviously, a density may further be represented by using a sum of squares of distances of every two cores. Besides, a core density may also be clearly embodied in other alternative manners, for example, quantities of cores distributed in core partitions of a same size, and a density of cores distributed in a core partition.

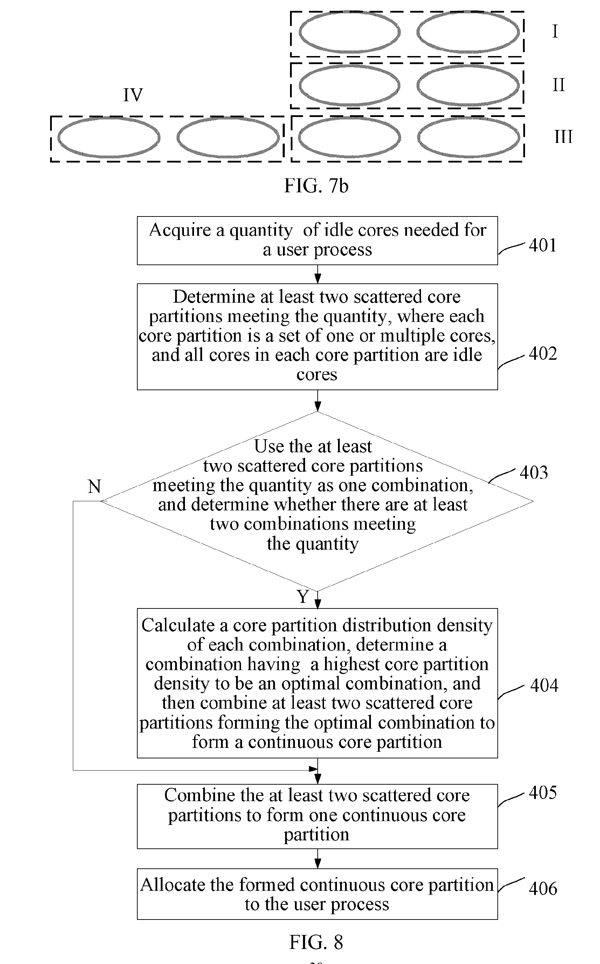

For a density of a continuous core partition formed by means of combination, reference may be made to FIG. 7a and FIG. 7b. Two continuous core partitions are each formed by migrating four scattered core partitions I, II, III, and IV, and each continuous core partition includes 8 cores. However, it may be found by calculating a sum of squares of distances between every two cores that the density in FIG. 7a is greater than that in FIG. 7b (that is, compared with FIG. 7b, a sum of squares of distances between 8 cores in FIG. 7a is smaller); therefore, when a reference core partition and a secondary core partition are determined and there are at least two optimal paths, the secondary core partition should be migrated to form the continuous core partition shown in FIG. 7a.

In this solution, when a migration manner cannot be determined by using a migration path and the quantity of cores involved in migration, communication efficiency of a continuous core partition formed by means of combination may be further taken into consideration. The 8 cores shown in FIG. 7a have a high density, and message interaction between processes can be directly implemented, and therefore communication efficiency is high. Correspondingly, the 8 cores shown in FIG. 7b have a relatively low density, and between cores included in I, II, and III, message interaction between processes can be directly implemented; when cores included in I and II perform message interaction with cores included in IV separately, it is possible that message interaction can only be implemented by passing through other cores (not shown), and therefore communication efficiency of a processor is affected.

Refer to FIG. 8, which is a flowchart of Embodiment 2 of a core resource allocation method according to the present invention. The method includes:
Step 401. Acquire a quantity of idle cores needed for a user process.
Step 402. Determine at least two scattered core partitions meeting the quantity, where each core partition is a set of one or multiple cores and all cores in each core partition are idle cores.
Step 403. Use the at least two scattered core partitions meeting the quantity as one combination, and determine whether there are at least two combinations meeting the quantity; and if yes, execute step 404; or otherwise, execute step 405 directly.
Step 404. Calculate a core partition distribution density of each combination, determine a combination having a highest core partition density to be an optimal combination, and then combine at least two scattered core partitions forming the optimal combination into a continuous core partition.
Step 405. Combine the at least two scattered core partitions to form one continuous core partition.
Step 406. Allocate the formed continuous core partition to the user process.

Different from Embodiment 1 of the allocation method, in this embodiment, after being determined, at least two scattered core partitions may be regarded as one combination; before the scattered core partitions are combined to form one continuous core partition, a quantity of such combinations in a processor may be first determined, and then one of the multiple combinations is determined to be an optimal core partition combination. The optimal core partition combination can both meet a quantity of idle cores needed for a user process and ensure a minimum migration cost.

For example, a user process needs a partition including 8 cores. In a search process, a core resource allocation apparatus determines 2 combinations meeting the need of the user process. One combination includes 3 core partitions, and the 3 core partitions further separately include 2 cores, 4 cores, and 2 cores. The other combination also includes 3 core partitions; however, the 3 core partitions separately include 2 cores, 3 cores, and 3 cores. In this case, one of the two combinations may be selected (determined by the apparatus randomly or selected by the user) to perform migration processing, or one optimal core partition combination may also be selected form the two combinations (the so-called optimal core partition combination refers to a combination having a minimum total migration cost). The manner of determining an optimal core partition combination provided in the present invention is to calculate a density of core partition nodes included in each combination; when a density is high, it represents that the core partition nodes are distributed closely, and correspondingly a total migration cost is low.

The manner of calculating a density of core partition nodes is similar to the manner of calculating a core density introduced in Solution 3 in the foregoing, and may be implemented in a manner of calculating a sum of distances or a sum of squares of distances between every two core partition nodes, which is no longer described herein. It should be noted that, in addition to the difference in a calculation object (in Solution 3, the calculation object is cores included in a continuous core partition, while in this embodiment, the calculation object is a scattered core partition used for forming a continuous core partition), the two manners further have the following differences:

In Solution 3, a density is mainly used to reflect communication efficiency of cores in a continuous core partition, while in this embodiment, a density is mainly used to reflect a condition of distribution between core partition nodes, so as to reflect a migration cost of a core partition node. Certainly, in a task allocation process in this embodiment, when a migration path needs to be determined, Solution 3 may also be used for implementation, that is, it is possible that in the whole allocation process, a density needs to be calculated twice: in the first time, when there are at least two core partition combinations, one optimal core partition combination is determined in a manner of calculating a density of at least two scattered core partition nodes (before migration) in the combinations; in the second time, when there are at least two optimal paths, one path is determined in a manner of calculating a density of cores in a continuous core partition formed by means of combination (after migration) to accomplish task allocation.

Refer to FIG. 9, which is a flowchart of Embodiment 3 of a core resource allocation method according to the present invention. The method includes:
Step 501. Acquire a quantity of idle cores needed for a user process.
Step 502. Determine whether there is a continuous core partition meeting the quantity in a many-core platform; and if yes, execute step 503 to allocate the continuous core partition to the user process; if not, execute step 504.
Step 504. Determine at least two scattered core partitions meeting the quantity, where each core partition is a set of one or multiple cores and all cores in each core partition are idle cores.
Step 505. Combine the at least two scattered core partitions to form one continuous core partition.
Step 506. Allocate the formed continuous core partition to the user process.

In this embodiment, before at least two scattered core partitions are determined, it is first determined whether there is a continuous core partition that can meet the need of the user process and is adjacent in position on the many-core platform (that is, a processor), and if yes, the continuous core partition can be directly allocated to the user process without needing to combine the scattered core partitions into one continuous core partition. That is, after acquiring a quantity of idle cores needed for the user process, a core resource allocation apparatus directly searches for a continuous core partition meeting the need of the quantity, and obtains one combined continuous core partition for the user process based on the partition migration solution of the present invention only when such a continuous core partition is not determined. Such a solution can both ensure an overall utilization rate and communication efficiency of the processor and enhance efficiency of core resource allocation of the present invention.

A manner in which a core resource allocation apparatus maintains a core region linked list and a core region connection diagram is used as an example in the following to briefly introduce a process of core resource allocation of the present invention.

After an OS is started, the core resource allocation apparatus first starts to acquire information about all cores of a processor (that is, a many-core platform), and then performs centralized management on all the cores. When a user process is started, a needed core partition is applied for from the core resource allocation apparatus, for example, 8 cores need to be applied for. Specifically, the allocation process is as follows:

First, the core resource allocation apparatus determines whether the total quantity of idle cores that currently exist in the processor meets a quantity of idle cores needed for the user process; and if not, buffers a request of the user process; or otherwise, continues with the following allocation process.

Next, when determining that the current idle cores of the processor meet the need of the user process, the core resource allocation apparatus searches a linked list to determine whether there is a continuous core partition meeting the need of the user process; and if yes, directly allocates the continuous core partition to the user process for the user process to run, and meanwhile further needs to update the state of the continuous core partition in the connection diagram to be allocated, and removes a node corresponding to the continuous core partition from the linked list; or otherwise, continues with the following allocation process.

Subsequently, the core resource allocation apparatus traverses the linked list to determine at least two scattered core partitions meeting the quantity of the user process. For example, three partition nodes a, b and c (in which a includes 3 idle cores, b includes 3 idle cores, and c includes 2 idle cores) are determined from the distribution diagram of core partitions of the processor shown in FIG. 10, and the partition node b is selected as a reference core partition, and it is determined that a migration path of a is region 3 and a migration path of c is region 9 and region 10. It should be noted that in FIG. 10, black nodes represent idle cores, and white nodes represent allocated cores.

Then, c is selected as a secondary core partition, and c is migrated to b according to the foregoing determined migration path, and meanwhile position relationships between the partitions 13, 12, 10, 9, 5, a, and c in the connection diagram are updated.

Finally, a is selected as a secondary core partition, and a is migrated to b according to the foregoing determined migration path, so that a, b and c are combined to form one continuous core partition 14. For details, reference may be made to the distribution diagram of core partitions after migration shown in FIG. 11. Meanwhile, position relationships between the partitions 0, 1, 5, 2, 3, 6, a, and b in the connection diagram further need to be updated, the partitions a, b and c that are originally in an idle state in the connection diagram are updated to be a partition 14 in an allocated state, and meanwhile nodes corresponding to the original partitions a, b and c are removed from the linked list. FIG. 3 is a linked list after migration and update.

It should be noted that, if task allocation cannot be performed without dividing an allocated core partition around a reference core partition, a priority level of a task being run on the allocated core partition and a priority level of a user process that requests allocation of a core resource may be determined; and if the priority level of the user process is relatively low, core partition migration is performed after the task being run on the allocated core partition is accomplished; or if the priority level of the user process is relatively high, the task being run on the allocated core partition is divided, so that the partition becomes idle to form a continuous core partition for the user process to run. Certainly, aspects of a case in which a core partition is to be migrated and a migration decision strategy (the priority level introduced in the foregoing is a migration decision strategy) are not limited in the present invention, as long as at least two scattered core partitions are combined to form one continuous core partition in a condition of ensuring normal work of the many-core platform.

Correspondingly, the present invention further provides a core resource allocation apparatus. Refer to FIG. 14, which is a schematic diagram of Embodiment 1 of the apparatus. The apparatus includes:
an acquiring unit 601, configured to acquire a quantity of idle cores needed for a user process, where
the acquiring unit is specifically configured to receive a request sent by the user process, and parse the request to obtain the quantity of idle cores needed for the user process; or the acquiring unit is specifically configured to search an idle core quantity configuration database to obtain the quantity of idle cores needed for the user process, where the database stores a correspondence between the user process and the quantity of idle cores;
a searching unit 602, configured to determine at least two scattered core partitions meeting the quantity, where each core partition is a set of one or multiple cores and all cores in each core partition are idle cores;
a combining unit 603, configured to combine the at least two scattered core partitions to form one continuous core partition; and
an allocating unit 604, configured to allocate the continuous core partition combined by the combining unit to the user process.

Furthermore, corresponding to Embodiment 1 of the combination process shown in FIG. 4, the present invention further provides a schematic structural diagram of Embodiment 1 of the combining unit 603, which, referring to FIG. 15, includes:
a first selecting unit 6031, configured to select one reference core partition from the at least two scattered core partitions; and
a first migrating unit 6032, configured to migrate remaining another core partition to combine the reference core partition and the another core partition to form the continuous core partition.

The first migrating unit includes:
a first storing unit, configured to store a task being run in an allocated core partition adjacent to the reference core partition, where a quantity of cores in the allocated core partition is the same as a quantity of cores in the another core partition; and
a first task allocating unit, configured to allocate the task to the another core partition to run.

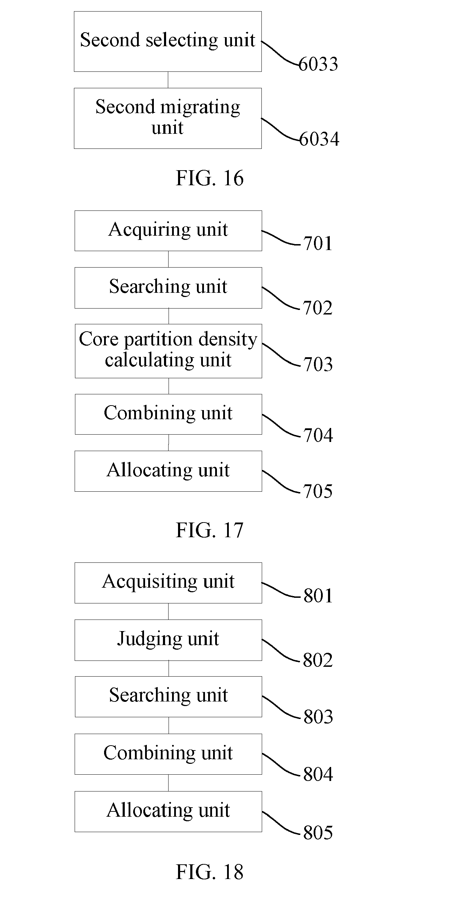

Furthermore, corresponding to Embodiment 2 of the combination process shown in FIG. 5, the present invention further provides a schematic structural diagram of Embodiment 2 of the combining unit 603, which, referring to FIG. 16, includes:
a second selecting unit 6033, configured to select one reference core partition and one secondary core partition from the at least two scattered core partitions according to a core partition migration cost, so as to minimize a total core partition migration cost, where the total core partition migration cost is a sum of migration costs of the scattered core partitions; and
a second migrating unit 6034, configured to migrate the secondary core partition to combine the secondary core partition and the reference core partition; and if there still is remaining another core partition, further determine one reference core partition and one secondary core partition from the combined core partition and the remaining another core partition, and perform core partition migration until the at least two scattered core partitions are combined to form one continuous core partition.

The second migrating unit includes:
a second storing unit, configured to store a task being run in an allocated core partition adjacent to the reference core partition, where a quantity of cores in the allocated core partition is the same as a quantity of cores in the secondary core partition; and
a second task allocating unit, configured to allocate the task to the secondary core partition to run.

Furthermore, to lower a migration cost of a core partition, when migrating the secondary core partition, the second task allocating unit further should select one proper migration path, for which the present invention provides three solutions as follows:

Solution 1: The second task allocating unit includes:
a first determining unit, configured to determine a shortest migration path between the secondary core partition and the reference core partition; and
a first allocating subunit, configured to forward, according to the shortest migration path, the task to the secondary core partition to run.

Based on Solution 1 in the foregoing, Solution 2 is further provided in the following. The second task allocating unit further includes:
a weighting processing unit, configured to: when there are at least two shortest migration paths, perform weighting processing on the shortest migration paths according to a quantity of cores included in core partitions through which the shortest migration paths pass, and determine the shortest migration path with a minimum weight value to be an optimal path, so that the first allocating subunit forwards the task according to the optimal path.

Based on Solution 2 in the foregoing, Solution 3 is further provided in the following. The second task allocating unit further includes:
a core density calculating unit, configured to: when there are at least two optimal paths, calculate core distribution densities of at least two core partitions in the continuous core partitions formed through migration according to the optimal paths, and migrate the secondary core partition, so as to maximize a core distribution density of the continuous core partition.

Refer to FIG. 17, which is a schematic diagram of Embodiment 2 of a core resource allocation apparatus. The apparatus includes:
an acquiring unit 701, configured to acquire a quantity of idle cores needed for a user process;
a searching unit 702, configured to determine at least two scattered core partitions meeting the quantity, where each core partition is a set of one or multiple cores and all cores in each core partition are idle cores;
a core partition density calculating unit 703, configured to use the at least two scattered core partitions meeting the quantity as one combination, and if there are at least two combinations meeting the quantity, calculate a core partition distribution density of each combination, and determine a combination having a highest core partition density to be an optimal combination;
a combining unit 704, configured to combine the at least two scattered core partitions of the optimal combination into one continuous core partition; and
an allocating unit 705, configured to allocate the continuous core partition combined by the combining unit to the user process.

Refer to FIG. 18, which is a schematic diagram of Embodiment 3 of a core resource allocation apparatus. The apparatus includes:
an acquiring unit 801, configured to acquire a quantity of idle cores needed for a user process;
a judging unit 802, configured to determine whether there is a continuous core partition meeting the quantity on a many-core platform, and if yes, allocate the continuous core partition to the user process;
a searching unit 803, configured to: when the judging unit determines that the continuous core partition does not exist, determine at least two scattered core partitions meeting the quantity, where each core partition is a set of one or multiple cores and all cores in each core partition are idle cores;
a combining unit 804, configured to combine the at least two scattered core partitions to form one continuous core partition; and
an allocating unit 805, configured to allocate the continuous core partition combined by the combining unit to the user process.

Besides, the present invention further provides a many-core system. The system includes multiple cores. The multiple cores include one execution core. The execution core is configured to perform resource allocation on other multiple cores of the multiple cores according to the allocation method provided in the present invention. It should be noted that the execution core is an execution body of the allocation method of the present invention. When a user process applies for a core resource, the execution core is responsible for performing resource allocation on other cores in the system for the user process to run.

Furthermore, an embodiment of the present invention further provides a hardware structure of a core resource allocation apparatus separately. The core resource allocation apparatus may include at least one processor (for example, a CPU), at least one network interface or another communications interface, a memory, and at least one communications bus which is configured to implement connection and communication between these apparatuses. The processor is configured to execute an executable module, for example, a computer program, stored in the memory. The memory may include a high-speed random access memory (RAM: Random Access Memory), or may also further include a non-volatile memory (non-volatile memory), for example, at least one magnetic disk memory. Communication and connection between a system gateway and at least another network element are implemented by means of the at least one network interface (which may be wired or wireless), and the Internet, a wide area network, a local area network, a metropolitan area network, and the like may be used.

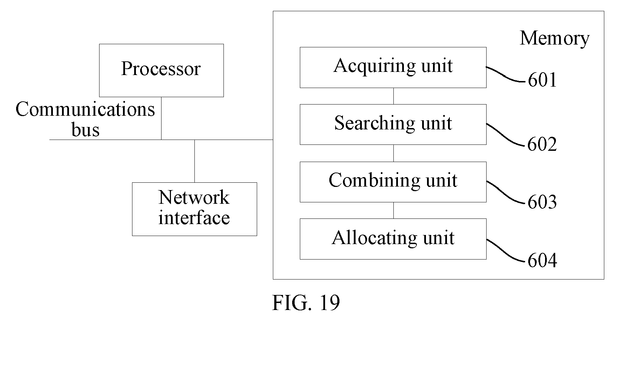

Referring to FIG. 19, in some implementation manners, the memory stores a program instruction, and the program instruction may be executed by the processor. The program instruction includes an acquiring unit 601, a searching unit 602, a combining unit 603, and an allocating unit 604, and for specific implementation of the units, reference may be made to the corresponding units disclosed in FIG. 14. Alternatively, the program instruction may further include other units disclosed in FIG. 17 or 18, which are no longer elaborated here.

The solutions in the present invention can be described in the general context of executable computer instructions executed by a computer, for example, a program unit. Generally, the program unit includes a routine, program, object, component, data structure, and the like for executing a particular task or implementing a particular abstract data type. The solutions in the present invention may also be practiced in distributed computing environments in which tasks are performed by remote processing devices that are connected through a communications network. In a distributed computing environment, program units may be located in both local and remote computer storage media including storage devices.

The embodiments in this specification are all described in a progressive manner, for same or similar parts in the embodiments, reference may be made to these embodiments, and each embodiment focuses on a difference from other embodiments. Especially, an apparatus embodiment is basically similar to a method embodiment, and therefore is described briefly; for related parts, reference may be made to partial descriptions in the method embodiment. The described apparatus embodiment is merely exemplary. The units described as separate parts may or may not be physically separate, and parts displayed as units may or may not be physical units, may be located in one position, or may be distributed on multiple network units. Apart or all of the modules may be selected according to actual needs to achieve the objectives of the solutions of the embodiments. A person of ordinary skill in the art may understand and implement the embodiments of the present invention without creative efforts.

The embodiments of the present invention are introduced in detail in the foregoing. Specific implementation manners are used in this specification to describe the present invention. The descriptions of the foregoing embodiments are merely intended to help understand the method and device of the present invention. In addition, with respect to the implementation manners and the application scope, modifications may be made by a person of ordinary skill in the art according to the idea of the present invention. Therefore, this specification shall not be construed as a limitation on the present invention.

## Claims

1. A core resource allocation method for allocating core resources on a many-core platform, comprising:
acquiring a quantity of idle cores needed for a user process;
determining at least two scattered core partitions meeting the quantity, wherein each core partition is a set of one or multiple cores and all cores in each core partition are idle cores;
combining the at least two scattered core partitions to form one continuous core partition; and
allocating the formed continuous core partition to the user process.

2. The method according to claim 1, wherein the acquiring a quantity of idle cores needed for a user process comprises:
receiving a request sent by the user process, and parsing the request to obtain the quantity of idle cores needed for the user process; or,
searching an idle core quantity configuration database to obtain the quantity of idle cores needed for the user process, wherein the database stores a correspondence between the user process and the quantity of idle cores.

3. The method according to any one of claims 1 and 2, wherein the combining the at least two scattered core partitions to form one continuous core partition comprises:
selecting one reference core partition from the at least two scattered core partitions; and
migrating remaining another core partition to combine the reference core partition and the another core partition to form the continuous core partition.

4. The method according to claim 3, wherein the migrating remaining another core partition comprises:
storing a task being run in an allocated core partition adjacent to the reference core partition, wherein a quantity of cores in the allocated core partition is the same as a quantity of cores in the another core partition; and
allocating the task to the another core partition to run.

5. The method according to any one of claims 1 and 2, wherein the combining the at least two scattered core partitions to form one continuous core partition comprises:
selecting one reference core partition and one secondary core partition from the at least two scattered core partitions according to a core partition migration cost, so as to minimize a total core partition migration cost, wherein the total core partition migration cost is a sum of migration costs of the scattered core partitions;
migrating the secondary core partition to combine the secondary core partition and the reference core partition; and
if there still is remaining another core partition, further determining one reference core partition and one secondary core partition from the combined core partition and the remaining another core partition, and performing core partition migration until the at least two scattered core partitions are combined to form one continuous core partition.

6. The method according to claim 5, wherein,
the migration cost is determined according to a migration path and/or a quantity of cores to be migrated, wherein when the migration path is long, the migration cost is high; when the quantity of cores to be migrated is large, the migration cost is high.

7. The method according to claim 5, wherein the migrating the secondary core partition comprises:
storing a task being run in an allocated core partition adjacent to the reference core partition, wherein a quantity of cores in the allocated core partition is the same as a quantity of cores in the secondary core partition; and
allocating the task to the secondary core partition to run.

8. The method according to claim 5, wherein the allocating the task to the secondary core partition to run comprises:
determining a shortest migration path between the secondary core partition and the reference core partition; and
forwarding, according to the shortest migration path, the task to the secondary core partition to run.

9. The method according to claim 8, wherein if there are at least two shortest migration paths, weighting processing is performed on the shortest migration paths according to a quantity of cores comprised in core partitions through which the shortest migration paths pass, the shortest migration path with a minimum weight value is determined to be an optimal path, and the task is forwarded according to the optimal path.

10. The method according to claim 9, wherein a manner of the weighting processing is:
adding weight values of the core partitions through which the shortest migration path passes, to obtain a weight value of the shortest migration path, wherein the weight value of the core partition is the quantity of cores comprised in the core partition, or the weight value of the core partition is a weight determined according to the quantity of cores comprised in the core partition.

11. The method according to claim 9, wherein if there are at least two optimal paths, core distribution densities of at least two core partitions in the continuous core partitions formed through migration according to the optimal paths are calculated, and the secondary core partition is migrated, so as to maximize a core distribution density of the continuous core partition.

12. The method according to claim 11, wherein a manner of calculating the core distribution density is:
calculating a sum of distances between every two cores in the continuous core partition; or,
calculating a sum of squares of distances between every two cores in the continuous core partition.

13. The method according to any one of claims 1 to 12, wherein,
the at least two scattered core partitions meeting the quantity are used as one combination; if there are at least two combinations meeting the quantity, a core partition distribution density of each combination is calculated, a combination having a highest core partition density is determined to be an optimal combination, and at least two scattered core partitions forming the optimal combination are then combined to form the continuous core partition.

14. The method according to claim 13, wherein a manner of calculating the core partition distribution density is:
calculating a sum of distances between every two core partitions in the combination; or,
calculating a sum of squares of distances between every two core partitions in the combination.

15. The method according to any one of claims 1 to 12, wherein before the determining at least two scattered core partitions meeting the quantity, the method further comprises:
determining whether there is a continuous core partition meeting the quantity on the many-core platform; and if yes, allocating the continuous core partition to the user process; if not, executing again the step of determining at least two scattered core partitions meeting the quantity.

16. A core resource allocation apparatus, wherein the apparatus is used to allocation core resources on a many-core platform, and the apparatus comprises:
an acquiring unit, configured to acquire a quantity of idle cores needed for a user process;
a searching unit, configured to determine at least two scattered core partitions meeting the quantity, wherein each core partition is a set of one or multiple cores and all cores in each core partition are idle cores;
a combining unit, configured to combine the at least two scattered core partitions to form one continuous core partition; and
an allocating unit, configured to allocate the continuous core partition combined by the combining unit to the user process.

17. The apparatus according to claim 16, wherein,
the acquiring unit is specifically configured to receive a request sent by the user process, and parse the request to obtain the quantity of idle cores needed for the user process; or,
the acquiring unit is specifically configured to search an idle core quantity configuration database to obtain the quantity of idle cores needed for the user process, wherein the database stores a correspondence between the user process and the quantity of idle cores.

18. The apparatus according to any one of claims 16 and 17, wherein the combining unit comprises:
a first selecting unit, configured to select one reference core partition from the at least two scattered core partitions; and
a first migrating unit, configured to migrate remaining another core partition to combine the reference core partition and the another core partition to form the continuous core partition.

19. The apparatus according to claim 18, wherein the first migrating unit comprises:
a first storing unit, configured to store a task being run in an allocated core partition adjacent to the reference core partition, wherein a quantity of cores in the allocated core partition is the same as a quantity of cores in the another core partition; and
a first task allocating unit, configured to allocate the task to the another core partition to run.

20. The apparatus according to any one of claims 16 and 17, wherein the combining unit comprises:
a second selecting unit, configured to select one reference core partition and one secondary core partition from the at least two scattered core partitions according to a core partition migration cost, so as to minimize a total core partition migration cost, wherein the total core partition migration cost is a sum of migration costs of the scattered core partitions; and
a second migrating unit, configured to migrate the secondary core partition to combine the secondary core partition and the reference core partition; and if there still is remaining another core partition, further determine one reference core partition and one secondary core partition from the combined core partition and the remaining another core partition, and perform core partition migration until the at least two scattered core partitions are combined to form one continuous core partition.

21. The apparatus according to claim 20, wherein the second migrating unit comprises:
a second storing unit, configured to store a task being run in an allocated core partition adjacent to the reference core partition, wherein a quantity of cores in the allocated core partition is the same as a quantity of cores in the secondary core partition; and
a second task allocating unit, configured to allocate the task to the secondary core partition to run.

22. The apparatus according to claim 21, wherein the second task allocating unit comprises:
a first determining unit, configured to determine a shortest migration path between the secondary core partition and the reference core partition; and
a first allocating subunit, configured to forward, according to the shortest migration path, the task to the secondary core partition to run.

23. The apparatus according to claim 22, wherein the second task allocating unit further comprises:
a weighting processing unit, configured to: when there are at least two shortest migration paths, perform weighting processing on the shortest migration paths according to a quantity of cores comprised in core partitions through which the shortest migration paths pass, and determine the shortest migration path with a minimum weight value to be an optimal path, so that the first allocating subunit forwards the task according to the optimal path.

24. The apparatus according to claim 23, wherein the second task allocating unit further comprises:
a core density calculating unit, configured to: when there are at least two optimal paths, calculate core distribution densities of at least two core partitions in the continuous core partitions formed through migration according to the optimal paths, and migrate the secondary core partition, so as to maximize a core distribution density of the continuous core partition.

25. The apparatus according to any one of claims 16 to 24, wherein the apparatus further comprises:
a core partition density calculating unit, configured to use the at least two scattered core partitions meeting the quantity as one combination; and if there are at least two combinations meeting the quantity, calculate a core partition distribution density of each combination, and determine a combination having a highest core partition density to be an optimal combination, so that the combining unit combines the at least two scattered core partitions forming the optimal combination to form the continuous core partition.

26. The apparatus according to any one of claims 16 to 24, wherein the apparatus further comprises:
a judging unit, configured to determine whether there is a continuous core partition meeting the quantity on the many-core platform; and if yes, allocate the continuous core partition to the user process; if not, further instruct the searching unit to determine at least two scattered core partitions meeting the quantity.

27. A many-core system, wherein the system comprises multiple cores, the multiple cores comprise one execution core, and the execution core is configured to perform resource allocation of other multiple cores of the multiple cores according to the method according to any one of claims 1 to 15.
